# FASCICULE DE BREVET EUROPEEN

(11) **EP 2 721 675 B1**
(45) Date de publication et mention de la délivrance du brevet: **23.09.2015**
(21) Numéro de dépôt: 12733790.5
(22) Date de dépôt: 15.06.2012
(51) Int. Cl.: H01M 6/18, H01M 6/40, H01M 10/0562, H01M 10/052

(54) **ELECTROLYTE SOLIDE POUR BATTERIE AU LITHIUM, COMPRENANT AU MOINS UNE ZONE EN MATÉRIAU VITROCÉRAMIQUE LITHIÉ ET PROCÉDÉ DE RÉALISATION.**
FESTER ELEKTROLYT FÜR EINE LITHIUMBATTERIE MIT MINDESTENS EINEM LITHIUMHALTIGEN GLASKERAMIKBEREICH UND HERSTELLUNGSVERFAHREN
SOLID ELECTROLYTE FOR LITHIUM BATTERY, COMPRISING AT LEAST ONE ZONE OF LITHIUM-CONTAINING GLASS CERAMIC MATERIAL AND METHOD OF PRODUCTION.

(30) Priorité: 16.06.2011 FR 1101849
(43) Date de publication de la demande: 23.04.2014
(73) Titulaire: Commissariat à l'Énergie Atomique et aux Énergies Alternatives, 75015 Paris (FR)
(72) Inventeur: OUKASSI Sami, F- 38120 Saint-Egrève (FR); GUERROUDJ Samir, F-42000 Saint-Etienne (FR); ROFFAT Michaël, F-36000 Chateauroux (FR)
(74) Mandataire: Talbot, Alexandre
(86) Numéro de dépôt international: PCT/FR2012/000246
(87) Numéro de publication internationale: WO 2012/172197

(56) Documents cités:
- EP-A2- 2 270 904
- US-A- 5 702 995
- US-A1- 2007 087 230
- US-A1- 2009 065 042

## Description

### Domaine technique de l'invention

L'invention est relative à un électrolyte solide pour batterie au lithium et notamment pour une micro-batterie au lithium « tout solide », comprenant au moins une zone en matériau vitrocéramique lithié et à un procédé de réalisation d'un électrolyte solide pour batterie au lithium comprenant au moins une zone en matériau vitrocéramique lithié.

### État de la technique

Les micro-batteries au lithium sont des batteries au lithium formées par les techniques utilisées dans le domaine de la microélectronique. Elles sont sous forme de films minces solides, généralement en matériaux inorganiques. Elles sont aussi appelées batteries ou microbatteries au lithium « tout solide », dans la mesure où tous leurs constituants, même l'électrolyte, sont sous une forme solide.

Parmi leurs constituants, un intérêt particulier doit être porté sur le choix de l'électrolyte solide. Celui-ci doit non seulement présenter une bonne conductivité ionique, mais aussi être un très bon isolant électronique. De plus, il est nécessaire d'obtenir un électrolyte solide le plus mince possible. L'épaisseur de l'électrolyte solide est, en effet, un facteur déterminant pour les performances finales des microbatteries au lithium.

Parmi les matériaux inorganiques connus pour être utilisés dans des électrolytes solides pour des microbatteries au lithium, on peut citer certains matériaux céramiques de type NASICON, en particulier les matériaux lithiés répondant à la formule Li₁₊ₓMₓN₂₋ₓ(PO₄)₃, avec M = Al, Ga, Cr, Sc,... et N= Ti, Ge, Hf,... ou à la formule Li_{1+x+y}MₓN₂₋ₓQ_{y}P_{3-y}O₁₂, avec en outre Q = Si, Se...

La demande de brevet US 2009/065042 décrit différentes façons de mettre en forme une couche d'électrolyte solide du type LIPON. La couche d'électrolyte peut être déposée, par exemple, par pulvérisation cathodique, CVD, PECVD, ALD, PLD, etc.

Ces matériaux présentent, cependant, l'inconvénient d'être difficiles à mettre en forme, notamment sous forme de films minces.

Il a été proposé par le passé de transformer ces matériaux sous une forme vitrocéramique, c'est-à-dire une phase vitreuse (ou phase amorphe) dans laquelle est dispersée une phase cristalline, généralement sous forme des micro-cristaux. Il a, en effet, été trouvé que cette transformation permet de diminuer la résistivité des joints de grains en matériau céramique et donc d'augmenter la conductivité ionique totale aux ions lithium à température ambiante. De plus, les matériaux vitrocéramiques lithiés sont plus faciles à mettre en oeuvre que leurs homologues en céramique.

Dans le brevet US5702995, il est par exemple proposé de former un matériau vitrocéramique lithié, avec une phase cristalline de type Li₁₊ₓAlₓTi₂₋ₓ(PO₄)₃. Celui est réalisé en formant, par fusion et solidification, un verre contenant les Ingrédients nécessaires à la formation de la phase cristalline, puis en formant, par un traitement thermique, ladite phase cristalline au sein de la matrice vitreuse. Ainsi, un matériau vitrocéramique lithié ayant une phase cristalline de type Li₁₊ₓAlₓTi₂₋ₓ(PO₄)₃ est plus particulièrement réalisé en mélangeant les matériaux précurseurs nécessaires à la réalisation de ce matériau et en les chauffant jusqu'à la fusion, dans un four électrique (avec une température typiquement jusqu'à 1450°C) pendant 1,5 heures. Après, avoir coulé le matériau en fusion sur un support pour former une plaque (ou bande) uniforme en phase vitreuse, la plaque est soumise à un recuit additionnel à 550°C, pendant 2 heures, pour éliminer les contraintes thermiques. Puis, les échantillons obtenus à partir de cette plaque sont soumis à un traitement thermique de recristallisation permettant d'obtenir le matériau vitrocéramique. Il a été trouvé que le matériau vitrocéramique obtenu après un traitement thermique de recristallisation à 1000°C, pendant 12 heures, présentait une conductivité des ions Li⁺ de 1,0.10⁻³ S/cm, à température ambiante.

En général, les plaques vitrocéramiques obtenues par un tel procédé de réalisation ne peuvent pas être directement utilisées comme électrolyte solide dans une microbatterie au lithium, dans la mesure où elles sont trop épaisses. De plus, plus les plaques en vitrocéramiques sont minces, plus elles sont fragiles, cassables et donc difficiles à manipuler.

Ainsi, pour faciliter sa mise en oeuvre, le matériau vitrocéramique est en général broyé, après sa synthèse, sous une forme pulvérulente et il est incorporé dans un polymère conducteur ionique aux ions Li⁺. L'ensemble peut, alors, être enduit sur un support ou bien être mis sous forme d'une couche mince flexible. La demande de brevet US2008/0268346 décrit, en particulier, un électrolyte solide utilisable dans une batterie au lithium, comprenant un polymère organique auquel a été ajouté un sel de lithium organique ou inorganique et une poudre de matériau vitrocéramique conducteur d'ions Li⁺.

Cependant, l'incorporation du matériau vitrocéramique sous forme de poudre dans un polymère conducteur ionique aux ions lithium provoque une augmentation de la conductivité électronique de l'électrolyte solide ainsi formé, ce qui est néfaste pour la durée de vie de la batterie. De plus, les électrolytes solides obtenus présentent une épaisseur comprise entre 20µm et 60µm. Cette gamme d'épaisseur, bien que faible par rapport aux techniques de réalisation du matériau vitrocéramique sous forme de plaques telles que décrites dans le brevet US5702995, reste tout de même assez élevée dans un domaine d'application où l'on cherche à obtenir des électrolytes solides les plus minces possibles.

### Objet de l'invention

L'objet de l'invention a pour but de réaliser un électrolyte solide pour batterie au lithium et en particulier pour une microbatterie au lithium, comprenant au moins une zone en matériau vitrocéramique lithié et remédiant aux inconvénients de l'art antérieur.

En particulier, l'invention a pour but de réaliser et de proposer un électrolyte solide comprenant une zone en matériau vitrocéramique lithié, performant dans le domaine des batteries au lithium tout en étant facile à mettre en forme, notamment sous forme d'un film mince et ce afin de pouvoir être intégré dans un procédé plus général de formation d'une microbatterie au lithium.

On tend vers cet objet par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 est un schéma-bloc illustrant différentes étapes d'un procédé de réalisation d'un électrolyte solide pour batterie au lithium selon l'invention.
- les figures 2 à 6 représentent schématiquement et en coupe un premier mode particulier de réalisation d'un électrolyte solide pour batterie au lithium.
- les figures 7 à 11 représentent schématiquement et en coupe un second mode particulier de réalisation d'un électrolyte solide pour batterie au lithium.
- les figures 12 à 14 sont des graphiques sur lesquels sont reportées des mesures de spectroscopie d'impédance électrochimique réalisées pour un empilement comprenant un électrolyte solide en LAGP disposé entre deux électrodes en platine, l'électrolyte solide étant une couche mince obtenue à 3 stades différents dans un procédé de réalisation selon l'invention : avant traitement laser, après traitement laser et après traitement thermique de recristallisation.

### Description de modes préférentiels de l'invention

Au moins une zone en matériau vitrocéramique lithié, dans un électrolyte solide pour batterie au lithium et notamment pour une microbatterie au lithium « tout solide », est formée à partir d'un matériau céramique lithié.

Par électrolyte solide pour batterie au lithium, on entend un électrolyte sous forme solide, excluant la présence d'un composant sous forme liquide, et convenant à une utilisation dans une batterie au lithium, c'est-à-dire apte à transporter ou conduire les ions lithium (Li⁺).

Par matériau céramique lithié, on entent un matériau solide, présentant à la fois des éléments métalliques (en particulier du lithium) et des éléments non-métalliques. Une fois synthétisé, il se trouve, en général, sous une forme pulvérulente, mais il peut être mis en forme, notamment par frittage. A titre d'exemple, le matériau céramique lithié peut être du type Li_{0,5}La_{0,5}TiO₃ également connu sous le sigle LLTO ou du type Li_{1,5}Al_{0,5}Ge_{1,5}(PO₄)₃ également connu sous le sigle LAGP.

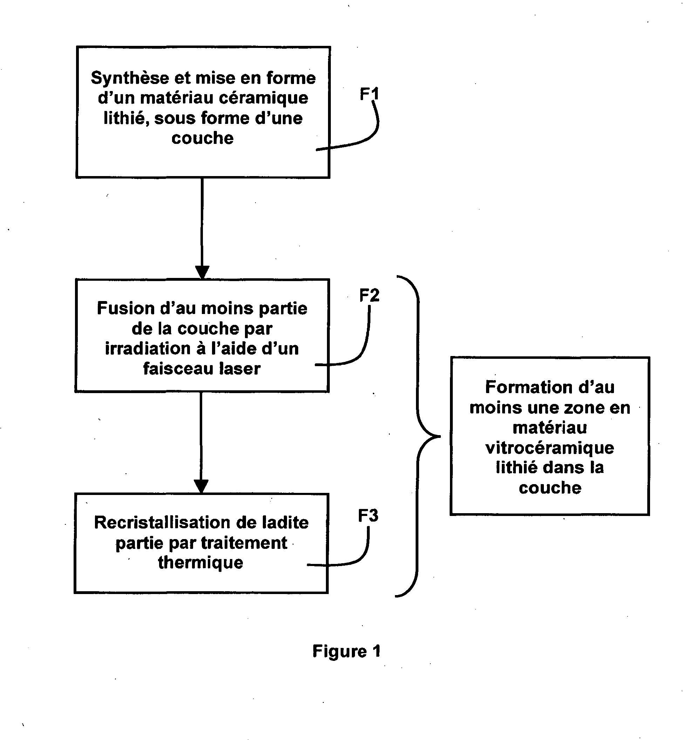

Comme illustré par l'étape F1 sur la figure 1, le matériau céramique lithié utilisé pour réaliser la zone en matériau vitrocéramique lithié est, avantageusement, synthétisé et mis en forme avant sa transformation en matériau vitrocéramique lithié (étapes F2 et F3). De plus, le matériau céramique lithié est, avantageusement, mis sous la forme d'une couche pour permettre l'utilisation ultérieure de cette couche ou d'une partie de cette couche en tant qu'électrolyte solide pour batterie au lithium.

Les techniques utilisées pour la synthèse et la mise en forme sous forme de couche varient selon le type de couche souhaité, notamment si l'on souhaite une couche fine ou une couche épaisse et/ou une couche poreuse ou non. Dans la plupart des cas, il est intéressant d'obtenir une couche poreuse, avec une compacité inférieure ou égale à 95% et avantageusement comprise entre 70% et 95% et encore plus avantageusement comprise entre 85% et 95%.

Pour une couche épaisse, également appelée forme ou substrat massif dans le domaine de la microélectronique, avec typiquement une épaisseur supérieure à 250µm et avantageusement supérieure à 300µm, le matériau céramique lithié est synthétisé sous forme d'une poudre par des techniques classiquement connues de l'homme de l'art, puis la poudre est mise sous la forme d'un substrat massif.

À titre d'exemple, la poudre de matériau céramique lithié peut être obtenue en mélangeant, dans des proportions stoechiométriques, les différents composants précurseurs utiles à la réalisation dudit matériau, suivi de plusieurs traitements thermiques, broyages et tamisages. Ceci permet d'obtenir une poudre de matériau céramique lithié. Le matériau céramique lithié synthétisé sous forme de poudre est ensuite mis en forme. Par exemple, la poudre peut être pastillée, puis pressée de façon uniaxiale et/ou isostatique. Lorsque l'on souhaite obtenir un substrat massif poreux, un polymère tel que le polyéthylène glycol, le polyfluorure de vinylidène, le polyvinyle butyrale peut être ajouté à la poudre avant le pastillage. Ensuite, la pastille réalisée subit un traitement thermique, en général entre 850°C et 1050°C jusqu'à une durée de 24 heures selon le type de matériau. Pour obtenir des couches très épaisses (typiquement entre 100 à 500µm d'épaisseur), une fois le matériau céramique lithié synthétisé, celui-ci peut être mélangé dans une barbotine composée de solvants, de polymères et de plastifiants, qui est ensuite déposée et mise en forme à l'épaisseur désirée sur un film, par exemple en polyester siliconé. Un séchage à l'air permet ensuite l'évaporation des solvants pour décomposer les polymères de départ et d'un frittage vers 850-1050°C. Un tel procédé permet d'obtenir des couches ou bandes très poreuses.

Pour l'obtention d'une couche mince, également appelée film mince et dont l'épaisseur est typiquement inférieure ou égale à 250µm et avantageusement comprise entre 1 et 10µm, le matériau céramique lithié peut, par exemple, être synthétisé sous forme d'une poudre et appliqué sur une cible servant à réaliser un dépôt physique en phase vapeur (PVD) sur un support. Une autre voie de synthèse et de mise en forme pour des épaisseurs de couche comprises entre 10 et 100µm est une technique de formation par sol-gel. Cette technique permet de régler la porosité du film mince, en fonction de la concentration de la solution initialement préparée.

Ensuite, comme illustré par l'étape F2 sur la figure 1, au moins une partie de la couche est irradiée par faisceau laser et en particulier par faisceau laser à impulsions, afin d'obtenir la fusion du matériau céramique lithié et l'obtention, après solidification, d'une phase vitreuse. Le fait de réaliser la fusion d'une partie du matériau céramique lithié par une étape d'irradiation par faisceau laser présente de nombreux avantages. En particulier, cela permet de contrôler précisément la partie du matériau à fusionner, destinée à former la zone en matériau vitrocéramique lithié.

L'utilisation d'un faisceau laser sur des matériaux céramiques lithiés n'était pas évidente pour l'homme du métier. En effet, bien que les lasers et notamment les lasers à impulsions soient aujourd'hui utilisés industriellement pour des applications de découpe, de soudage, de marquage, ils ne sont que très rarement utilisés dans des domaines faisant intervenir du lithium. En effet, l'irradiation par faisceau laser et notamment par faisceau laser à impulsions induit une élévation de température localisée très élevée, typiquement entre 1000°C et 1600°C. Or, il est connu qu'avec un traitement thermique classique au dessus de 1300°C, le lithium s'évapore sous la forme de Li₂O, ce qui est néfaste pour la conductivité ionique totale du matériau. Or, il a été constaté, dans le cadre de la présente invention, que l'évaporation de Li₂O est minime par rapport à la quantité de lithium présente dans le matériau, ce qui permet de préserver les bonnes propriétés de conductivité ionique du matériau, une fois celui-ci transformé en matériau vitrocéramique lithié.

Le choix du faisceau laser et des paramètres du procédé d'irradiation conditionnent l'énergie apportée au sein du matériau céramique lithié. Ces paramètres sont, en particulier, la longueur d'onde du faisceau laser à impulsion, la fréquence et la fluence de pulsation du faisceau laser, ainsi que l'atmosphère dans laquelle le traitement est réalisé. Avantageusement, le laser à impulsions utilisé pour réaliser la fusion est un laser dit laser nanoseconde. De plus, la fusion est, avantageusement, réalisée sous vide primaire ou bien dans une atmosphère de gaz inerte, tel que l'hélium ou l'argon.

Il est, ainsi, possible de contrôler et maîtriser la fusion du matériau et l'épaisseur sur laquelle le traitement doit être réalisé. Ceci est intéressant, notamment lorsque le matériau céramique lithié est sous forme d'un film mince disposé sur un support. Ceci permet de pouvoir réaliser l'électrolyte solide sur un support comprenant déjà des éléments actifs de la batterie au lithium sans les endommager. C'est, notamment, le cas pour le collecteur de courant et au moins une des électrodes de la micro-batterie qui peuvent, ainsi, être déjà formés.

Une fois la phase vitreuse obtenue, la partie du matériau ayant subi l'étape d'irradiation par faisceau laser est au moins soumise à un traitement thermique de recristallisation pour former le matériau vitrocéramique lithié (étape F3). La recristallisation par traitement thermique est partielle : elle permet la formation de cristaux de matériau céramique lithié dans la phase vitreuse, ce qui forme, par définition, le matériau vitrocéramique lithié. Ce traitement thermique de recristallisation peut être, de manière classique, réalisé dans un four, à une température inférieure à la température de fusion du matériau céramique lithié et avantageusement comprise entre 500°C et 1000°C, pendant une durée comprise entre 1 heure et 72 heures. Selon une alternative, il peut aussi être réalisé par un traitement thermique par irradiation par faisceau laser afin de ne traiter notamment qu'une partie du matériau céramique lithié.

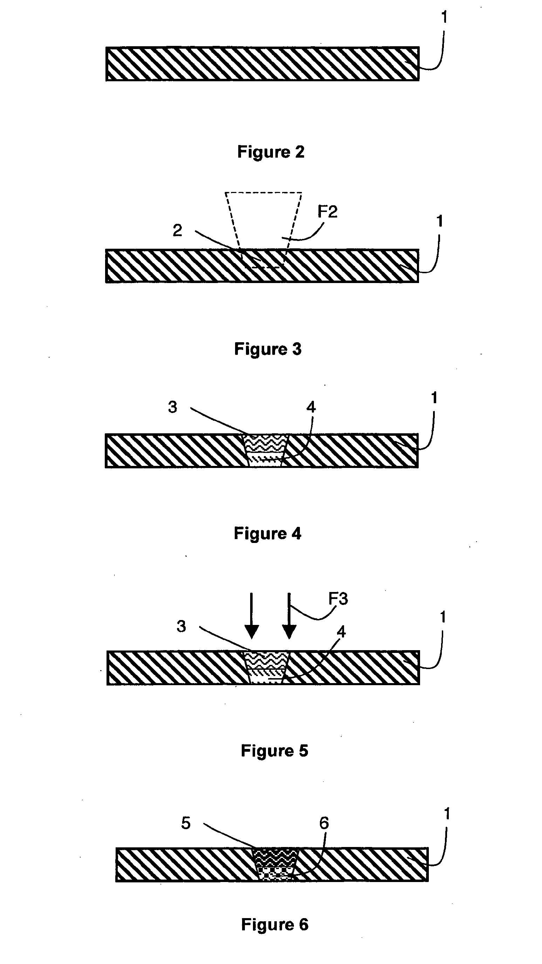

Les figures 2 à 6 illustrent un mode particulier de réalisation d'un électrolyte solide pour batterie au lithium, à partir d'un substrat massif 1 en matériau céramique lithié.

Le substrat 1 a été préalablement synthétisé et mis en forme de manière classique. Le substrat a, avantageusement, une épaisseur supérieure à 250µm. Le substrat 1 peut être autosupporté.

Sur la figure 2, le substrat massif 1 est soumis à une étape d'irradiation par faisceau laser. En particulier, dans ce mode particulier de réalisation, cette étape d'irradiation par faisceau laser est locale : seule une partie 2 du substrat 1 est soumise à une irradiation par faisceau laser sur la figure 2. Ainsi, l'étape d'irradiation localisée est représentée, de façon schématique, par un trapèze en traits en pointillés sur la figure 2, la partie du trapèze délimitée dans le substrat 1 correspondant à la partie 2 irradiée du substrat. De plus, sur la figure 2, cette partie 2 est formée dans la partie supérieure du substrat 1, avec une épaisseur inférieure à l'épaisseur totale du substrat 1. Bien entendu, dans des variantes de réalisation, l'étape d'irradiation par faisceau laser pourrait être réalisée sur l'ensemble du substrat 1 ou bien être localisée sur une partie du substrat dans toute l'épaisseur du substrat 1.

Cette opération d'irradiation par faisceau laser a pour effet de provoquer la fusion du matériau céramique lithié dans la partie 2 du substrat 1 et qui, une fois solidifiée, est constituée par une phase vitreuse. Cette phase vitreuse est représentée par la figure 4 par la référence 3. De plus, le substrat 1 présente, en général, une certaine porosité. Ainsi, le matériau céramique lithié en fusion dans la partie 2 passe à travers les pores du substrat, dans une zone 4 non irradiée par le faisceau laser du substrat 1, disposée sous la partie 2. Le matériau en fusion enrobe alors les grains en matériau céramique lithié disposés dans ladite zone 4. Après refroidissement du matériau en fusion, cette zone 4 présente alors une microstructure différente du reste du substrat non irradié: elle est constituée par les grains du matériau céramique lithié enrobés par une phase vitreuse. Cette phase vitreuse ou amorphe est non conductrice des ions lithium.

Ensuite, le traitement thermique de recristallisation, représenté par les flèches F3 sur la figure 5, est réalisé afin de transformer la phase vitreuse préalablement réalisée en matériau vitrocéramique lithié. Il est, en particulier, réalisé à une température inférieure à la température de fusion du matériau céramique lithié et donc à la température atteinte par irradiation avec le faisceau laser. Ce traitement peut être, comme sur la figure 5, localisé à la partie du substrat formée par la partie 3 en phase vitreuse, avec éventuellement la zone 4 disposée sous la partie 3 en phase vitreuse. Dans ce cas, la partie 3 du substrat 1 est transformée en matériau vitrocéramique lithié et constitue la zone 5 en matériau vitrocéramique lithié de l'électrolyte solide. De plus, l'électrolyte solide comporte une zone additionnelle 6, en contact avec la zone 5 et constituée de grains en matériau céramique lithié enrobés de matériau vitrocéramique lithié (figure 6). Les joints de grain dans un tel substrat 1 sont, par conséquent, moins résistifs que dans le matériau céramique lithié initial.

Selon une alternative, le traitement thermique de recristallisation pourrait être réalisé sur la totalité du substrat 1 ou bien encore localisé uniquement sur la partie 3 du substrat 1.

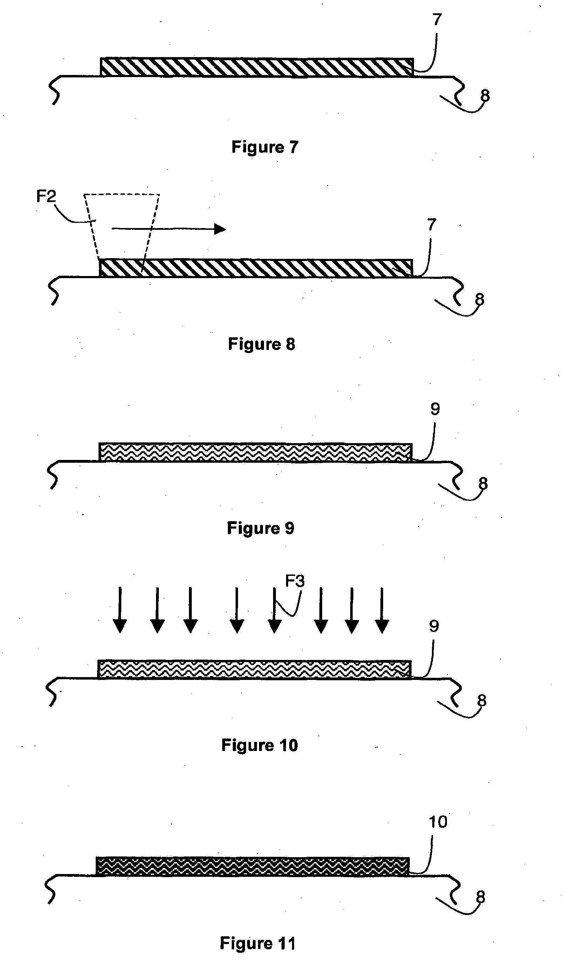

Les figures 7 à 11 illustrent un mode particulier de réalisation d'un électrolyte solide pour batterie au lithium, à partir d'un film mince 7 en matériau céramique lithié.

Le film mince 7 a été préalablement formé, sur la figure 7, sur un support 8 et il présente, en général, une épaisseur inférieure à 250µm. Le support 8 est, par exemple en silicium, en verre ou en métal. Il est, de manière avantageuse, formé par un empilement de plusieurs couches (empilement multicouches), elles même préalablement formées dans le cadre d'un procédé plus général de fabrication d'une batterie au lithium et notamment d'une microbatterie au lithium tout solide. Il s'agit notamment des couches constituant au moins un collecteur de courant, par exemple en platine, et une électrode convenant à la réalisation d'une batterie au lithium telle qu'une électrode de type LiCO₂, Si, Ge ou C.

Dans ce mode particulier de réalisation, l'ensemble du film mince 7 est, avantageusement, irradié par le faisceau laser (trapèze F2 sur la figure 8). Ainsi, la totalité du matériau en céramique lithié est mise en fusion et transformée en phase vitreuse 9 après refroidissement (figure 9).

Bien que l'irradiation par faisceau laser ne soit pas localisée dans une partie du film mince 7, elle n'en reste pas moins contrôlée et maîtrisée, de manière à ne pas perturber les couches sous-jacentes dans le support 7. Ainsi, cette irradiation par faisceau laser est, en particulier, contrôlée afin d'irradier le film mince 7 sur la totalité de son épaisseur, sans toucher le support 8 sous-jacent. Ceci est, particulièrement, intéressant dans le cadre d'un procédé de fabrication d'une batterie au lithium où l'électrolyte solide est directement formé sur un empilement comprenant des composés actifs de ladite batterie. En effet, ces composés actifs (notamment collecteurs de courant et électrodes) ne supporteraient pas un traitement thermique aux températures nécessaires à la fusion du matériau céramique lithié. Le fait de réaliser la fusion du matériau céramique lithié par irradiation par faisceau laser permet ainsi de former un électrolyte solide avec au moins une zone en matériau vitrocéramique lithié, directement sur les composants actifs de la batterie au lithium, à partir d'un matériau céramique lithié.

Une fois la phase vitreuse obtenue, un traitement thermique de recristallisation est réalisé (flèches F3 sur la figure 10) pour transformer la phase vitreuse en matériau vitrocéramique lithié. Sur la figure 11, l'électrolyte solide 10 obtenu est, ainsi, constitué par le matériau vitrocéramique lithié. De plus, le traitement thermique de recristallisation est, avantageusement, contrôlé pour ne pas endommager les couches sous-jacentes à l'électrolyte solide. Il peut être réalisé par une opération additionnelle d'irradiation par faisceau laser.

À titre d'exemple, un matériau céramique lithié poreux de type Li_{1,5}Al_{0,5}Ge_{1,5}(PO₄)₃ également noté LAGP est réalisé à partir des précurseurs suivants :
- LiOH.H₂O,
- Al₂O₃
- GeO₂
- NH₄H₂PO₄.

Ces précurseurs sont pesés et mélangés dans des conditions stoechiométriques pour préparer 3 grammes de matériau céramique. Le mélange est ensuite inséré dans un creuset en platine et traité thermiquement à 500°C pendant 2 heures. La poudre obtenue est ensuite broyée pendant 1 heure à sec dans un broyeur à boulets, avec des billes en agate. La poudre est, ensuite, traitée thermiquement à 900°C pendant 2 heures dans un creuset en platine, puis, elle est à nouveau broyée dans les mêmes conditions que précédemment.

Une fois synthétisé, le matériau céramique pulvérulent est mis en forme de couches. Ainsi, trois couches identiques en LAGP ont été formées pour mesurer leur conductivité ionique aux ions lithium, respectivement avant irradiation par faisceau laser, après irradiation par faisceau laser et après traitement thermique de recristallisation.

Pour former chaque couche, 1g de poudre synthétisée est inséré dans un moule de 32mm d'épaisseur et pressé uniaxialement sous une pression de 4 tonnes. La pastille obtenue est ensuite frittée à 950°C pendant 2 heures et forme une couche en LAGP, ayant une compacité de 85% et une épaisseur de 700µm.

Une des trois couches en LAGP est disposée entre deux électrodes en platine pour former un empilement (a) tandis que les deux autres couches en LAGP sont soumises à un traitement par irradiation par faisceau laser pour transformer le LAGP en verre. Le traitement par irradiation par faisceau laser est réalisé dans les conditions suivantes :
- temps d'impulsion : 30 ns
- longueur d'onde : 248 nm
- fréquence : entre 1 et 45 Hz
- fluence : 450 mJ/cm²
- nombre de pulsation : entre 1 et 10000
- atmosphère : vide primaire

Une des deux couches soumises au traitement par irradiation par faisceau laser est disposée entre deux électrodes en platine pour former un empilement (b).

La dernière couche est soumise à un traitement thermique à 875°C, pendant 12 heures pour former le matériau vitrocéramique lithié, avant d'être disposée entre deux électrodes en platine pour former un empilement (c).

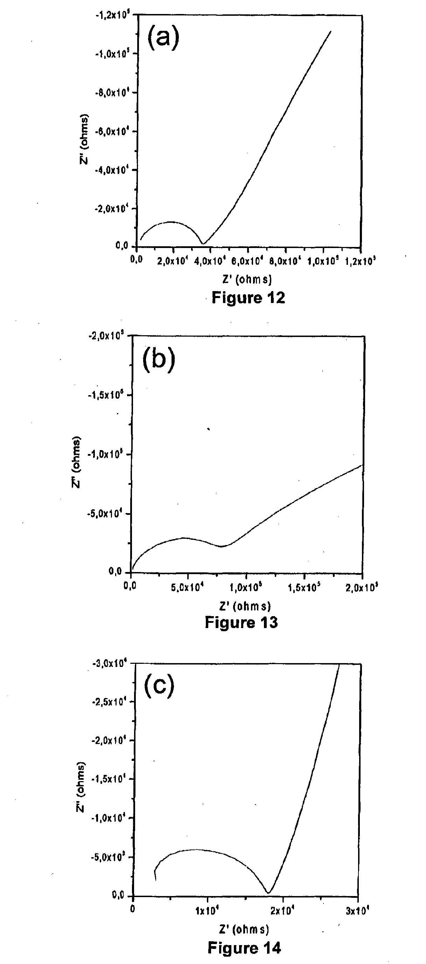

Les mesures de spectroscopie d'impédance électrochimique réalisées à température ambiante sur ces trois empilements (a) à (c) sont respectivement reportées sur les figures 12 à 14. Le diamètre du demi-cercle présent sur les graphiques des figures 12 à 14 est un facteur représentatif de la conductivité ionique totale du matériau électrolytique de l'empilement considéré.

On constate que le matériau LAGP traité par faisceau laser, avant traitement thermique de recristallisation (empilement b) présente sur la figure 13 un demi-cercle beaucoup plus allongé et donc un diamètre plus élevé qu'avant traitement par faisceau laser (empilement a-figure 12), ce qui signifie une conductivité ionique totale aux ions lithium plus faible que le matériau avant traitement par faisceau laser (figure 12). Ceci confirme le passage de l'état de matériau céramique à celui de phase vitreuse beaucoup plus résistif. Une fois le traitement thermique de recristallisation réalisé et donc la transformation en matériau vitrocéramique lithié (empilement c), le demi-cercle du graphique sur la figure 14 est nettement plus petit que celui du graphique selon la figure 12, ce qui signifie une augmentation de la conduction ionique totale aux ions lithium par rapport au matériau céramique initial.

Le tableau ci-dessous rapporte la mesure de conductivité ionique totale pour les 3 empilements.

| **Empilement** | **Conductivité ionique totale (en S/cm) à température ambiante** |
|---|---|
| a | 1,5.10⁻⁵ |
| b | 5,0.10⁻⁶ |
| c | 2,9.10⁻⁵ |

Ainsi, le procédé proposé présente l'avantage de permettre la réalisation d'un électrolyte solide comprenant une partie en matériau vitrocéramique lithié localisée dans l'espace (latéralement et/ou verticalement), compatible avec les techniques utilisées pour réaliser les autres composants d'une batterie au lithium, tout en conservant de très bonnes performances électrochimiques. De plus, il permet la conservation de la stoechiométrie du matériau dans la mesure où très peu de LiO₂ s'évapore au regard de la totalité des ions Li⁺ présents, comparé à une fusion obtenue classiquement à partir de 1300°C dans un four.

## Revendications

1. Procédé de réalisation d'un électrolyte solide pour batterie au lithium, comprenant au moins une zone (5, 10) en matériau vitrocéramique lithié, **caractérisé en ce que** la zone (5, 10) en matériau vitrocéramique lithié est formée par fusion d'au moins une partie (2) d'un matériau céramique lithié, réalisée par une opération d'irradiation par faisceau laser et suivie d'un traitement thermique de recristallisation.

2. Procédé selon la revendication 1, **caractérisé en ce que** le matériau céramique lithié est, avant l'opération d'irradiation par faisceau laser, sous la forme d'une couche.

3. Procédé selon la revendication 2, **caractérisé en ce que** la couche présente une compacité comprise entre 70% et 95% et avantageusement entre 85% et 95%.

4. Procédé selon l'une des revendications 2 et 3, **caractérisé en ce que** la couche est un film mince (7).

5. Procédé selon la revendication 4, **caractérisé en ce que** le film mince (7) est formé sur un support (8), avant l'opération d'irradiation par faisceau laser.

6. Procédé selon la revendication 5, **caractérisé en ce que** le support (8) est un empilement multicouche comprenant au moins un collecteur de courant et une électrode pour batterie au lithium.

7. Procédé selon l'une quelconque des revendications 4 à 6, **caractérisé en ce que** l'ensemble du film mince (7) est soumis à l'opération d'irradiation par faisceau laser.

8. Procédé selon l'une des revendications 2 et 3, **caractérisé en ce que** la couche est un substrat massif (1).

9. Procédé selon la revendication 8, **caractérisé en ce que** le substrat massif (1) est soumis localement à l'opération d'irradiation par faisceau laser, la partie (2) du substrat massif soumise à l'opération d'irradiation par faisceau laser formant, après le traitement thermique de recristallisation, la zone (5) en matériau vitrocéramique lithié de l'électrolyte solide.

10. Procédé selon l'une quelconque des revendications 1 à 9, **caractérisé en ce que** le faisceau laser est un faisceau laser à impulsion.

11. Procédé selon l'une quelconque des revendications 1 à 10, **caractérisé en ce que** le traitement thermique de recristallisation est réalisé dans un four, à une température inférieure à la température de fusion du matériau céramique lithié, pendant une durée comprise entre une heure et 72 heures.

12. Procédé selon l'une quelconque des revendications 1 à 10, **caractérisé en ce que** le traitement thermique de recristallisation est réalisé par une opération additionnelle d'irradiation par faisceau laser.

13. Electrolyte solide pour batterie au lithium comprenant au moins une zone (5) en matériau vitrocéramique lithié, **caractérisé en ce qu'**il comporte au moins une zone additionnelle (6), constituée par des grains en matériau céramique lithié enrobés par le matériau vitrocéramique lithié, ladite zone additionnelle étant en contact avec la zone en matériau vitrocéramique lithié.

## Patentansprüche

1. Verfahren zur Herstellung eines Festelektrolyten für Lithium-Batterie, umfassend wenigstens einen Bereich (5, 10) aus lithiumhaltigem Glaskeramikmaterial, **dadurch gekennzeichnet, dass** der Bereich (5, 10) aus lithiumhaltigem Glaskeramikmaterial durch Schmelzen wenigstens eines Teils (2) aus einem lithiumhaltigem Keramikmaterial gebildet wird, das durch einen Bestrahlungsvorgang mittels Laserstrahl vollzogen wird und an das sich eine Rekristallisationswännebehandlung abschließt.

2. Verfahren nach Anspruch 1, **dadurch gekennzeichnet, dass** das lithiumhaltige Keramikmaterial vor dem Laserstrahl-Bestrahlungsvorgang in Form einer Schicht vorliegt.

3. Verfahren nach Anspruch 2, **dadurch gekennzeichnet, dass** die Schicht eine Kompaktheit zwischen 70 % und 95 % und vorteilhafterweise zwischen 85 % und 95 % aufweist.

4. Verfahren nach einem der Ansprüche 2 und 3 **dadurch gekennzeichnet, dass** die Schicht ein dünner Film (7) ist.

5. Verfahren nach Anspruch 4, **dadurch gekennzeichnet, dass** der dünne Film (7) vor dem Laserstrahl-Bestrahlungsvorgang auf einem Träger (8) ausgebildet wird.

6. Verfahren nach Anspruch 5, **dadurch gekennzeichnet, dass** der Träger (8) ein mehrlagiger Stapel mit wenigstens einem Stromkollektor und einer Elektrode für eine Lithium-Batterie ist.

7. Verfahren nach einem der Ansprüche 4 bis 6, **dadurch gekennzeichnet, dass** der gesamte dünne Film (7) dem Laserstrahl-Bestrahlungsvorgang unverzogen wird.

8. Verfahren nach einem der Ansprüche 2 und 3, **dadurch gekennzeichet,** dass die Schicht ein massives Substrat (1) ist.

9. Verfahren nach Anspruch 8, **dadurch gekennzeichnet, dass** das massive Substrat (1) dem Laserstrahl-Bestrahlungsvorgang lokal unterzogen wird, wobei der dem Laserstrahl-Bestrahlungsvorgang unterzogene Teil (2) des massiven Substrats nach der Rekristallisationswärmebehandlung den Bereich (5) aus lithiumhaltigem Glaskeramikmaterial des Festelektrolyten bildet.

10. Verfahren nach einem der Ansprüche 1 bis 9, **dadurch gekennzeichnet, dass** der Laserstrahl ein Impulslaserstrahl ist.

11. Verfahren nach einem der Ansprüche 1 bis 10, **dadurch gekennzeichnet, dass** die Rekristallisationswärmebehandlung in einem Ofen bei einer Temperatur unterhalb der Schmelztemperatur des lithiumhaltigen Keramikmaterials über eine Dauer zwischen einer Stunde und 72 Stunden durchgeführt wird.

12. Verfahren nach einem der Ansprüche 1 bis 10, **dadurch gekennzeichnet, dass** die Rokristälisationswärmebehandlung durch einen zusätzlichen Laserstrah-Bestrahlungsvorgang vollzogen wird.

13. Festelektrolyt für eine Lithium-Batterie, umfassend wenigstens einen Bereich (5) aus lithiumhaltigem Glaskeramikmaterial, **dadurch gekennzeichnet, dass** er wenigstens einen zusätzlichen Bereich (6) umfasst, der durch Körner aus lithiumhaltigem Keramikmaterial, die mit dem lithiumhaltigen Glaskeramikmaterial umhüllt sind, gebildet ist, wobei der zusätzliche Bereich mit dem Bereich aus litbiumhaltigem Glaskeramikmaterial in Kontakt ist.

## Claims

1. A method for producing a solid electrolyte for a lithium battery comprising at least one zone (5, 10) made from lithiated glass-ceramic material, **characterized in that** the lithiated glass-ceramic material zone (5, 10) is achieved by melting of at least a part (2) of a lithiated ceramic material, performed by a laser beam irradiation operation and followed by a recrystallization heat treatment

2. The method according to claim 1, **characterized in that**, before the laser beam irradiation operation, the lithiated ceramic material is in the form of a layer.

3. The method according to claim 2, **characterized in that** the layer presents a compactness comprised between 70% and 95% and advantageously between 85% and 95%.

4. The method according to one of claims 2 and 3, **characterized in that** the layer is a thin film (7).

5. The method according to claim 4, **characterized in that** the thin film (7) is formed on a support (8), before the laser beam irradiation operation.

6. The method according to claim 5, **characterized in that** the support (8) is a multilayer stack comprising at least one current collector and an electrode for a lithium battery.

7. The method according to any one of claims 4 to 6, **characterized in that** the whole of the thin film (7) is subjected to the laser beam irradiation operation.

8. The method according to one of claims 2 and 3, **characterized in that** the layer is a bulk substrate (1).

9. The method according to claim 8, **characterized in that** the bulk substrate (1) is locally subjected to the laser beam irradiation operation, the part (2) of the bulk substrate subjected to the laser beam irradiation operation forming the lithiated glass-ceramic material zone (5) of the solid electrolyte, after the recrystallization heat treatment.

10. The method according to any one of claims 1 to 9, **characterized in that** the laser beam is a pulsed laser beam.

11. The method according to any one of claims 1 to 10, **characterized in that** the recrystallization heat treatment is performed in a furnace at a lower temperature than the melting temperature of the lithiated ceramic material, for a time comprised between 1 hour and 72 hours.

12. The method according to any one of claims 1 to 10, **characterized in that** the recrystallization heat treatment is performed by an additional laser beam irradiation operation.

13. A solid electrolyte for a lithium battery comprising at least one lithiated glass-ceramic material zone (5), **characterized in that** it comprises at least one additional zone (6) constituted by grains of lithiated ceramic material coated by the lithiated glass-ceramic material, said additional zone being in contact with the lithiated glass-ceramic material zone.
